(19) Europäisches Patentamt / European Patent Office / Office européen des brevets

(11) **EP 4 498 558 A1**

(12) **EUROPEAN PATENT APPLICATION**

(43) Date of publication:
**29.01.2025 Bulletin 2025/05**

(21) Application number: **23212109.5**

(22) Date of filing: **24.11.2023**

(51) International Patent Classification (IPC):
*H02J 3/32* (2006.01)   *H02J 3/38* (2006.01)
*H02J 3/48* (2006.01)   *H02J 13/00* (2006.01)

(52) Cooperative Patent Classification (CPC):
**H02J 3/32; H02J 3/381; H02J 3/48; H02J 13/00**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **25.07.2023 CN 202310921517**

(71) Applicant: **Sungrow (Shanghai) Co., Ltd.**
**Shanghai 201203 (CN)**

(72) Inventors:
• **LU, Mengxuan**
  **230088 Hefei, Anhui (CN)**
• **WEI, Zhengjia**
  **230088 Hefei, Anhui (CN)**
• **LIU, Xing**
  **230088 Hefei, Anhui (CN)**

(74) Representative: **Biallo, Dario et al**
**Barzanò & Zanardo S.p.A.**
**Via Borgonuovo, 10**
**20121 Milano (IT)**

(54) **ENERGY STORAGE DISPATCHING METHOD AND RELATED DEVICES**

(57) An energy storage dispatching method and devices are provided. The method is applied to a local dispatching module of a micro grid system. The micro grid system further comprises a cloud dispatching module and a power control module. The method comprises: receiving an energy storage dispatching instruction sent by the cloud dispatching module, wherein the energy storage dispatching instruction comprises a dispatching mode and a target state of charge; determining, based on the dispatching mode and the target state of charge, a theoretical energy storage power; adjusting, based on operation state information of the microgrid, the theoretical energy storage power, to obtain a target energy storage power, wherein the operation state information comprises a current load power; and sending the target energy storage power to the power control module, to allow the power control module adjust charging-discharging power of the energy storage device and/or the generated power of power generation assembly.

Receive an energy storage dispatching instruction sent by the cloud dispatching module, where the energy storage dispatching instruction includes a dispatching mode and a target state of charge for energy storage — 201

Determine, based on the dispatching mode and the target state of charge for energy storage, a theoretical energy storage power — 202

Adjust, based on operation state information of the grid-connected microgrid, the theoretical energy storage power, to obtain a target energy storage power, and the operation state information at least includes a current load power — 203

Send the target energy storage power to the power control module, to allow the power control module adjust a charging and discharging power of the energy storage device and/or a generated power of the power generation assembly for energy storage dispatching — 204

**Fig. 2**

EP 4 498 558 A1

## Description

### FIELD

The present disclosure relates to the field of electric power energy storage dispatching technology, and in particular to, an energy storage dispatching method and related devices.

### BACKGROUND

With the rapid development of energy storage technology, microgrid systems are becoming more and more widely used. For a microgrid system with an energy storage device and a power control module, a conventional energy dispatching system generally has a cloud dispatching layer and a local dispatching layer. The cloud dispatching layer (cloud) comprehensively considers weather, electricity price predictions, power generation predictions, load power predictions and other factors, and sends dispatching instructions to the local dispatching layer (local); the local dispatching layer processes the dispatching instructions from the cloud according to the operation conditions of the device, and then sends them to the device for execution, to maintain the safety and stability within the microgrid system.

The dispatching strategy is generally executed in the cloud, and the dispatching strategy on cloud does not change within a dispatching interval. For example, the cloud sent a charging instruction for the energy storage at last dispatching time instant, but the local load suddenly increases during the dispatching interval. In this case, execution of such charging instruction at this time instant would cause the power of the microgrid to exceed the power draw limit.

Due to the high volatility of the local load, the cloud is incapable of responding to the local load change timely, resulting in the low response efficiency and reduced dispatching efficiency.

### SUMMARY

An energy storage dispatching method and related devices are provided according to the present disclosure, which are used to timely adjust the energy storage power value based on the operation state information of the grid-connected microgrid. In this way, it can improve the response speed to load changes of the grid-connected microgrid and enhance the dispatching efficiency.

In a first aspect of an embodiment of the present disclosure, an energy storage dispatching method is provided, which is applied to a local dispatching module of a grid-connected microgrid system, where the grid-connected microgrid system further includes a cloud dispatching module, a power control module, an energy storage device and a power generation assembly; the method includes: receiving an energy storage dispatching instruction sent by the cloud dispatching module, where the energy storage dispatching instruction includes a dispatching mode and a target state of charge for energy storage; determining, based on the dispatching mode and the target state of charge for energy storage, a theoretical energy storage power; adjusting, based on operation state information of the grid-connected microgrid, the theoretical energy storage power, to obtain a target energy storage power, where the operation state information at least includes a current load power; and sending the target energy storage power to the power control module, to allow the power control module adjust a charging and discharging power of the energy storage device and/or a generated power of the power generation assembly for energy storage dispatching.

In a second aspect of an embodiment of the present disclosure, an energy storage dispatching method is provided, which is applied to a cloud dispatching module of a grid-connected microgrid system, where the grid-connected microgrid system further includes a local dispatching module, a power control module, an energy storage device and a power generation assembly; the method includes: receiving operation state information sent by the local dispatching module, where the operation state information includes a current time instant, a weather feature vector, a state of charge for the energy storage device, a current load power, a generated power of power-generation and a current electricity price; determining, based on the operation state information, a predicted electricity price value, a predicted load power value and a predicted generated power value of power-generation; inputting the operation state information, the predicted electricity price value, the predicted load power value and the predicted generated power value of power-generation into a preset dispatching model, to generate an energy storage dispatching instruction; where the energy storage dispatching instruction indicates a dispatching mode and includes a target state of charge for energy storage, which is a state of charge of the energy storage device required to be reached at a target dispatching time instant; and sending the energy storage dispatching instruction to the local dispatching module, to allow the power control module adjust a charging and discharging power of the energy storage device and/or a generated power of the power generation assembly for energy storage dispatching.

In a third aspect of an embodiment of the present disclosure, an energy storage dispatching method is provided, which is applied to a grid-connected microgrid system, where the grid-connected microgrid system includes a local dispatching module, a cloud dispatching module, a power control module, an energy storage device and a power generation assembly, the method includes: receiving, by the cloud dispatching module, operation state information sent by the local dispatching module; where the operation state information includes a current time instant, a weather feature vector, a state of charge for the energy storage device, a current load power, a generated power of power-generation and a current electricity price; determining, by the cloud dispatching module, a predicted electricity price value, a predicted load power value and a predicted generated power value of power-generation, based on the operation state information; inputting, by the cloud dispatching module, the operation state information, the predicted electricity price value, the predicted load power value and the predicted generated power value of power-generation into a preset dispatching model, to generate an energy storage dispatching instruction; where the energy storage dispatching instruction indicates a dispatching mode and includes a target state of charge for energy storage, which is a state of charge of the energy storage device required to be reached at a target dispatching time instant; sending, by the cloud dispatching module, the energy storage dispatching instruction to the local dispatching module, to allow the power control module adjust a charging and discharging power of the energy storage device and/or a generated power of the power generation assembly for energy storage dispatching; determining, by the local dispatching module, a theoretical energy storage power, based on the dispatching mode and the target state of charge for energy storage; adjusting, by the local dispatching module, the theoretical energy storage power based on the operation state information of the grid-connected microgrid, to obtain the target energy storage power, where the operation state information at least includes the current load power; and sending, by the local dispatching module, the target energy storage power to the power control module, so that the power control module adjusts the charging and discharging power of the energy storage device and/or the generated power of the power generation assembly to complete energy storage dispatching.

In a fourth aspect of an embodiment of the present disclosure, a local dispatching module is provided, which is applied to a local dispatching module of a grid-connected microgrid system, where the grid-connected microgrid system further includes a cloud dispatching module, a power control module, an energy storage device and a power generation assembly; the local dispatching module includes: an instruction receiving unit, configured to receive an energy storage dispatching instruction sent by the cloud dispatching module, where the energy storage dispatching instruction includes a dispatching mode and a target state of charge for energy storage; a power determination unit, configured to determine a theoretical energy storage power, based on the dispatching mode and the target state of charge for energy storage; a power adjustment unit, configured to adjust the theoretical energy storage power based on operation state information of the grid-connected microgrid to obtain a target energy storage power, where the operation state information at least includes a current load power; and a power sending unit, configured to send the target energy storage power to the power control module, to allow the power control module adjust a charging and discharging power of the energy storage device and/or a generated power of the power generation assembly for energy storage dispatching.

In a fifth aspect of an embodiment of the present disclosure, a cloud dispatching module is provided, which is applied to a cloud dispatching module of a grid-connected microgrid system, where the grid-connected microgrid system further includes a local dispatching module, a power control module, an energy storage device and a power generation assembly; the cloud dispatching module includes: an information receiving unit, configured to receive operation state information sent by the local dispatching module, where the operation state information includes a current time instant, a weather feature vector, a state of charge for the energy storage device, a current load power, a generated power of power-generation and a current electricity price; a prediction value determination unit, configured to determine, based on the operation state information, a predicted electricity price value, a predicted load power value and a predicted generated power value of power-generation; an instruction generation unit, configured to input the operation state information, the predicted electricity price value, the predicted load power value and the predicted generated power value of power-generation into a preset dispatching model, to generate an energy storage dispatching instruction; where the energy storage dispatching instruction indicates a dispatching mode and includes a target state of charge for energy storage, which is a state of charge of the energy storage device required to be reached at a target dispatching time instant; an instruction sending unit, configured to send the energy storage dispatching instruction to the local dispatching module, to allow the power control module adjust a charging and discharging power of the energy storage device and/or a generated power of the power generation assembly for energy storage dispatching.

In a sixth aspect of an embodiment of the present disclosure, an energy storage dispatching device is provided, which includes: a memory; and at least one processor; where the memory is configured to store instructions; the at least one processor is configured to invoke the instructions in the memory to cause the energy storage dispatching device to implement the energy storage dispatching method according to the first aspect above.

In a seventh aspect of an embodiment of the present disclosure, an energy storage dispatching device is provided, which includes: a memory; and at least one processor; where the memory is configured to store instructions; the at least one processor is configured to invoke the instructions in the memory to cause the energy storage dispatching device to implement the energy storage dispatching method according to the second aspect above.

In an eight aspect of an embodiment of the present disclosure, a computer readable store medium is provided. The computer readable store medium stores instructions thereon, when the instructions are running on a computer, the computer is caused to implement the energy storage dispatching method above.

In the technical solutions of the embodiments of the present disclosure, an energy storage dispatching instruction sent by the cloud dispatching module is received, where the energy storage dispatching instruction includes a dispatching mode and a target state of charge for energy storage; a theoretical energy storage power is determined based on the dispatching mode and the target state of charge for energy storage; the theoretical energy storage power is adjusted based on operation state information of the grid-connected microgrid to obtain a target energy storage power, where the operation state information at least includes a current load power; and the target energy storage power is sent to the power control module, to allow the power control module adjust a charging and discharging power of the energy storage device and/or a generated power of the power generation assembly for energy storage dispatching. In the embodiment of the present disclosure, the theoretical energy storage power is calculated based on the energy storage dispatching instruction, the theoretical energy storage power is adjusted according to the current load power of the grid-connected microgrid, and the grid-connected microgrid is controlled according to the adjusted target energy storage power value. In this way, the response speed to the load fluctuation of the grid-connected microgrid and the dispatching efficiency are improved.

## BRIEF DESCRIPTION OF THE DRAWINGS

Figure 1 is a schematic structural diagram of a grid-connected microgrid system according to an embodiment of the present disclosure;

Figure 2 is a schematic diagram of an energy storage dispatching method according to an embodiment of the present disclosure;

Figure 3 is a schematic diagram of an energy storage dispatching method according to another embodiment of the present disclosure;

Figure 4 is a schematic structural diagram of a cloud dispatching module according to an embodiment of the present disclosure;

Figure 5 is a schematic diagram of an energy storage dispatching method according to another embodiment of the present disclosure;

Figure 6 is a schematic diagram of a local dispatching module according to an embodiment of the present disclosure;

Figure 7 is a schematic diagram of a cloud dispatching module according to an embodiment of the present disclosure; and

Figure 8 is a schematic diagram of an energy storage dispatching device according to an embodiment of the present disclosure.

## DETAILED DESCRIPTION OF EMBODIMENTS

An energy storage dispatching method and related devices are provided according to the present disclosure, which are used to timely adjust the energy storage power based on the operation state information of the grid-connected microgrid. In this way, it can improve the response speed of the grid-connected microgrid to load changes and enhance the dispatching efficiency.

The terms "first" and "second", "third", "fourth" and the like (if present) in the description, claims and drawings of the present disclosure are used to distinguish similar objects and are not used to describe a specific order or sequence. It should be understood that the referenced objects are interchangeable under appropriate circumstances so that the embodiments of the present disclosure can be implemented in orders other than those illustrated or described herein. In addition, the term "comprise", "include" or any other variation thereof is intended to cover a non-exclusive inclusion such that a process, method, system, product, or device comprising a set of elements includes not only those elements, but also includes other elements that are not explicitly listed, or includes elements inherent in the process, method, system, product, or device.

In conventional solution, due to the high volatility of the local load, when the local load changes, the cloud cannot respond to the load change at the user end timely, resulting in low response efficiency and reduced energy storage dispatching efficiency. Through the energy storage dispatching method provided in the present disclosure, the energy storage power is adjusted in time according to the operation state information of the grid-connected microgrid, which improves the response speed of the grid-connected microgrid to the load changes and improves the energy storage dispatching efficiency.

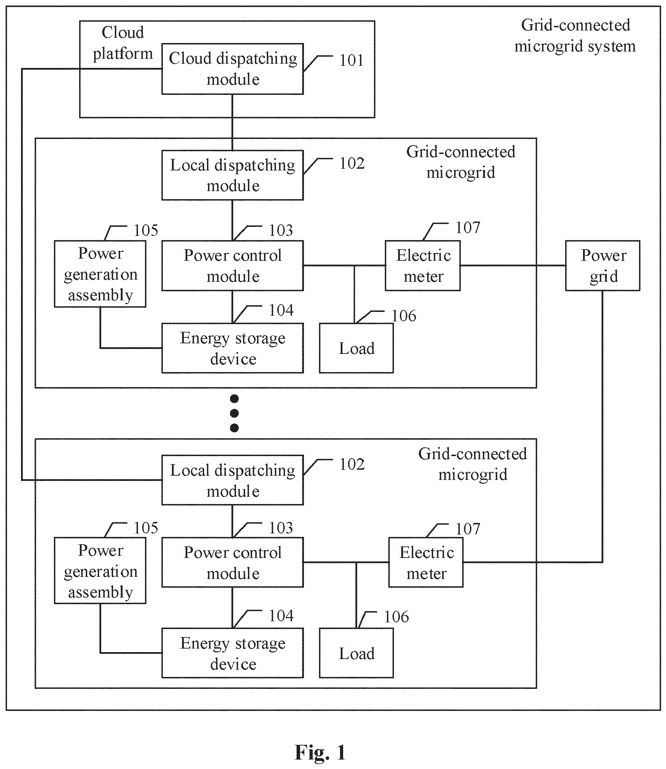

Embodiments of the present disclosure can be applied to a grid-connected microgrid system. The grid-connected microgrid system includes a cloud platform and at least one grid-connected microgrid. As shown in Figure 1, an interaction scenario of a grid-connected microgrid and a cloud platform is provided to illustrate the embodiments of the present disclosure. The cloud platform includes a cloud dispatching module 101. The grid-connected microgrid includes a local dispatching module 102, a power control module 103, an energy storage device 104 and a power generation assembly 105. In a case that the power generation assembly 105 is a photovoltaic power generation assembly, the power control module is a photovoltaic-and-storage integrated inverter. In a case that the power generation assembly 105 is not a photovoltaic power generation assembly, for example, when the power generation assembly is a wind power generation assembly, the power control module is an energy storage inverter. The grid-connected microgrid further includes a load 106 and an electric meter 107.

It should be noted that one cloud platform can correspondingly control multiple grid-connected micro grids. In this embodiment, illustration is made for the case that one cloud platform controls one grid-connected microgrid. In addition, the grid-connected microgrid further includes an edge computing device for local calculations.

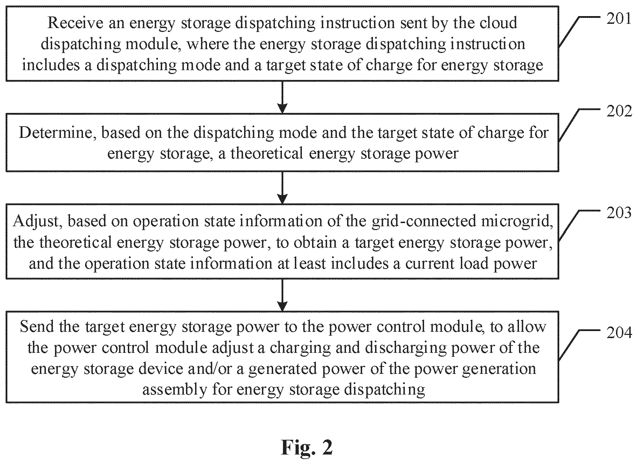

Reference is made to Figure 2. Figure 2 is a schematic diagram of an energy storage dispatching method according to an embodiment of the present disclosure, which specifically includes step 201 to step 204.

In step 201, an energy storage dispatching instruction sent by the cloud dispatching module is received, where the energy storage dispatching instruction includes a dispatching mode and a target state of charge (SOC) for energy storage.

It should be noted that the energy storage dispatching instruction received by the local dispatching module is a dispatch strategy used by the cloud dispatching module to collaboratively control the local dispatching modules in the grid-connected microgrids. The energy storage dispatching instruction at least includes the dispatching mode and target state of charge for energy storage. The dispatching mode is reflected by the flag bit of the dispatch strategy in the local dispatching module. For example, in response to the dispatching mode being a first mode (i.e., arbitrage mode), the local dispatching module of the grid-connected microgrid uses the control strategy corresponding to the first mode to dispatch the power of the energy storage device, thereby changing the state of charge (SOC) of the energy storage device. In response to the dispatching mode being a second mode (i.e., accommodation mode), the local dispatching module of the grid-connected microgrid uses the control strategy corresponding to the second mode to dispatch the power of the energy storage device, thereby changing the state of charge of the energy storage device.

It can be understood that the energy storage dispatching instruction sent by the cloud dispatching module is for the local dispatching module in each grid-connected microgrid. The number of grid-connected microgrids is the same as the number of local dispatching modules, and one grid-connected microgrid includes one local dispatching module. In the embodiments of the present disclosure, an interaction scenario between a grid-connected microgrid and a cloud dispatching module is provided for illustration.

In step 202, based on the dispatching mode and the target state of charge for energy storage, a theoretical energy storage power is determined.

The determination process of theoretical energy storage power includes multiple steps as follows.

1. A first energy storage power is determined, including the following steps. First, the output power of the power control module is calculated. The output power is equal to a current load power of the grid-connected microgrid and meets a preset power constraint range. The power constraint is that the output power of the power control module is less than or equal to the rated power of the power control module. Then, the first energy storage power is calculated, where the first energy storage power is equal to the output power of the power control module minus the generated power of the power generation assembly. For example, assuming that the current load power is 3 kW and the rated power of the power control module is 2 kW, then the output power of the power control module is 2 kW; assuming that the generated power of the power generation assembly is 4 kW, then the first energy storage power is equal to 2 kW minus 4 kW, i.e., -2 kW.

It is understandable that different dispatching strategies are executed by the local dispatching module in different dispatching modes.

2. In response to the dispatching mode being a first mode, a second energy storage power is calculated based on the target state of charge for energy storage. The target state of charge for energy storage is the state of charge that the cloud dispatching module requires the energy storage device to reach at a preset time, and the value range of the target state of charge for energy storage is [0, 1]. For example, in a case that the current state of charge SOC of the energy storage device is 0.2, the target state of charge SOC is 0.4, and the capacity of the energy storage device is 10kWh, then, it is required to charge 2kWh. If there are still 30 minutes until the next cloud dispatching, then the calculated second energy storage power is -4kW.

3. In a case that the dispatching mode is the first mode, the minimum one between the first energy storage power and the second energy storage power is determined as the theoretical energy storage power. For example, in the above two examples, the first energy storage power is - 2 kW, the second energy storage power is - 4 kW, and the theoretical energy storage power is - 4 kW.

4. In response to the dispatching mode being a second mode, the first energy storage power is determined as the theoretical energy storage power. The positive and negative signs of the first energy storage power, the second energy storage power and the theoretical energy storage power have the same meaning, i.e., indicating the charging state and discharging state of the energy storage device. A negative sign indicates that the energy storage device is in a charging state; and a positive sign indicates that the energy storage device is in a discharging state.

It should be noted that the target state of charge for energy storage here is indicated in the energy storage dispatching instruction sent from the cloud dispatching module to the local dispatching module at the last cloud dispatching time instant.

In step 203, based on operation state information of the grid-connected microgrid, the theoretical energy storage power is adjusted to obtain a target energy storage power, where the operation state information at least includes a current load power.

It is determined whether the grid-connected microgrid is in a mode of feeding surplus power; in a case that the grid-connected microgrid is not in the mode of feeding surplus power, it is determined whether a power at a grid connection point of the grid-connected microgrid is fed into grid; in a case that the power at the grid connection point of the grid-connected microgrid is fed into grid, a limited generated power of power-generation is calculated, which is configured to limit the generated power of the power generation assembly so that the power at the grid connection point is zero; based on the current load power of the grid-connected microgrid, the limited generated power of power-generation and the theoretical energy storage power are corrected to obtain the target energy storage power.

It should be noted that the theoretical energy storage power calculated in this embodiment is only the theoretical calculation value derived from an equation. In actual calculation, the charge and discharge efficiency also needs to be considered, thus the power needs to be corrected.

In step 204, the target energy storage power is sent to the power control module, to allow the power control module adjust a charging and discharging power of the energy storage device and/or a generated power of the power generation assembly for energy storage dispatching.

Based on the device operation conditions of the grid-connected microgrid, the local dispatching module processes the energy storage dispatching instructions sent by the cloud dispatching module and then sends them to the devices (e.g., the power control module, energy storage device and power generation assembly) for execution, to maintain internal safety and stability of the grid-connected microgrid system.

The dispatching interval of the cloud dispatching module is related to the number of grid-connected micro grids, the configuration of the cloud server and the real-time electricity price. For example, in a case that there are 100,000 grid-connected microgrids using the energy storage dispatching method of the present disclosure, and the cloud server can handle up to 10,000 dispatching requests per minute, then the dispatching interval of the cloud dispatching module, i.e., the cloud coarse-grained time interval, is at least 10 minutes. As another example, if the real-time electricity price changes every 15 minutes, the cloud coarse-grained time interval may be set to 15 minutes to facilitate timely dispatching. The dispatching interval of the local dispatching module in the grid-connected microgrid, i.e., the local fine-grained time interval, is related to the execution speed of the local dispatching module. For example, it is feasible to set to execute the energy storage dispatching method once per minute, i.e., the operation state information of the grid-connected microgrid is obtained once per minute, which at least includes the load power at the current instant. The local fine-grained time interval may alternatively be 10s and 30s, and the cloud coarse-grained time interval may alternatively be 15min and 30min, all of which can be adjusted according to actual needs and are not limited here.

In the embodiment of the present disclosure, based on the energy storage dispatching instruction sent by the cloud dispatching module, the local dispatching module adjusts the energy storage power at fine-grained time interval according to the operation state information of the grid-connected microgrid. The grid-connected microgrid is controlled according to the adjusted target energy storage power value, which improves the response speed to load fluctuations in the grid-connected microgrid and elevates the dispatching efficiency.

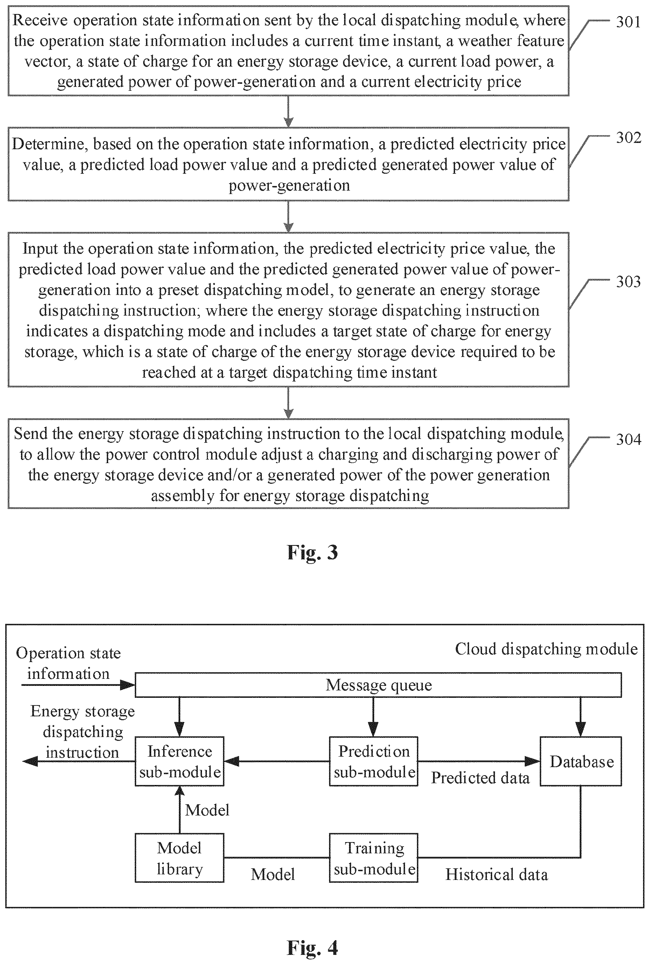

Reference is made to Figure 3. Figure 3 is a schematic diagram of an energy storage dispatching method according to another embodiment of the present disclosure, which specifically includes steps 301 to 304.

In step 301, operation state information sent by the local dispatching module is received, where the operation state information includes a current time instant, a weather feature vector, a state of charge for an energy storage device, a current load power, a generated power of power-generation and a current electricity price.

In an embodiment, the cloud dispatching module receives operation state information sent by the local dispatching module. The operation state information includes a current time instant T, a weather feature vector $W_T$, a state of charge for an energy storage device $E_T$, a current load power $P_T^{load}$, a generated power of power-generation $P_T^{pv}$ and a current electricity price $C_T^{grid}$. The weather feature vector $W_T$ contains features such as temperature, humidity, radiation intensity, whether it is sunny, or the like.

In step 302, a predicted electricity price value, a predicted load power value and a predicted generated power value of power-generation are determined based on the operation state information.

The cloud dispatching module acquires a predicted electricity price value $\hat{C}_{T+1}^{grid}$, predicted load power value $\hat{P}_{T+1}^{load}$ and predicted generated power value of power-generation $\hat{P}_{T+1}^{pv}$ at T+1 instant.

In step 303, the operation state information, the predicted electricity price value, the predicted load power value and the predicted generated power value of power-generation are inputted into a preset dispatching model, to generate an energy storage dispatching instruction; where the energy storage dispatching instruction indicates a dispatching mode and includes a target state of charge for energy storage, which is a state of charge of the energy storage device required to be reached at a target dispatching time instant.

The cloud dispatching module combines the operation state information, predicted electricity price value, predicted load power value and predicted generated power value of power-generation into a feature vector $S_T$,

$$S_T = (T, W_T, E_T, P_T^{load}, P_T^{pv}, C_T^{grid}, \hat{P}_{T+1}^{load}, \hat{P}_{T+1}^{pv}, \hat{C}_{T+1}^{grid})$$, and inputs the feature vector $S_T$ to the dispatching model $f_\theta$. The model $f_\theta$ outputs the instruction for dispatching mode and the instruction for the target state of charge.

In step 304, the energy storage dispatching instruction is sent to the local dispatching module, to allow the power control module adjust a charging and discharging power of the energy storage device and/or a generated power of the power generation assembly for energy storage dispatching.

The cloud dispatching module sends the energy storage dispatching instruction to the local dispatching module, and the power control module adjusts the charging and discharging power of the energy storage device and/or the generated power of the power generation assembly to complete energy storage dispatching.

It can be understood that the energy storage dispatching instruction represents an energy storage dispatching solution with a coarse-grained time interval, the solution being calculated by the cloud based on current parameters, and the local dispatching module is required to adjust the energy storage dispatching instruction by considering local operation state information and perform energy storage dispatching at fine-grained time intervals.

It should be noted that the local dispatching module is a part of the local structure of the grid-connected microgrid in the grid-connected microgrid system. The local structure of the grid-connected microgrid further includes a power control module, an energy storage device and a power generation assembly. The power generation assembly and the energy storage device are connected to the power control module. The local structure of the grid-connected microgrid further includes a local load and an electricity meter. Both local load and electricity meter are connected to the power control module. The cloud platform for grid-connected microgrid dispatching includes multiple sub-modules. The cloud platform is the cloud dispatching module. As shown in Figure 4, the cloud dispatching module includes inference sub-module, prediction sub-module, database, and training sub-module and model library, where the inference sub-module is used to implement the above energy storage dispatching method; the prediction sub-module is used to generate prediction values of electricity prices, load powers and generated power of power-generation; the database is used to store all historical data and prediction data of grid-connected microgrid; the training sub-module is used to train the dispatching model; and the model library is used to store the trained dispatching model for use by the inference sub-module.

It should be noted that, in a case that preset rules or optimization solvers are used to replace the deep reinforcement learning algorithm to generate the dispatching model, the cloud dispatching module may only include: message queue, inference sub-module, and prediction sub-module.

In the embodiment of the present disclosure, based on the operation state information of the grid-connected microgrid uploaded by the local dispatching module, an energy storage dispatching instruction including a dispatching mode and a target state of charge for energy storage is generated, which extends the dispatch time interval for the cloud dispatching module to implement the dispatch strategy and reduces the number of interactions between the local dispatching module and the cloud dispatching module, improving the efficiency of the cloud dispatching module responding to the dispatching request of the local dispatching module.

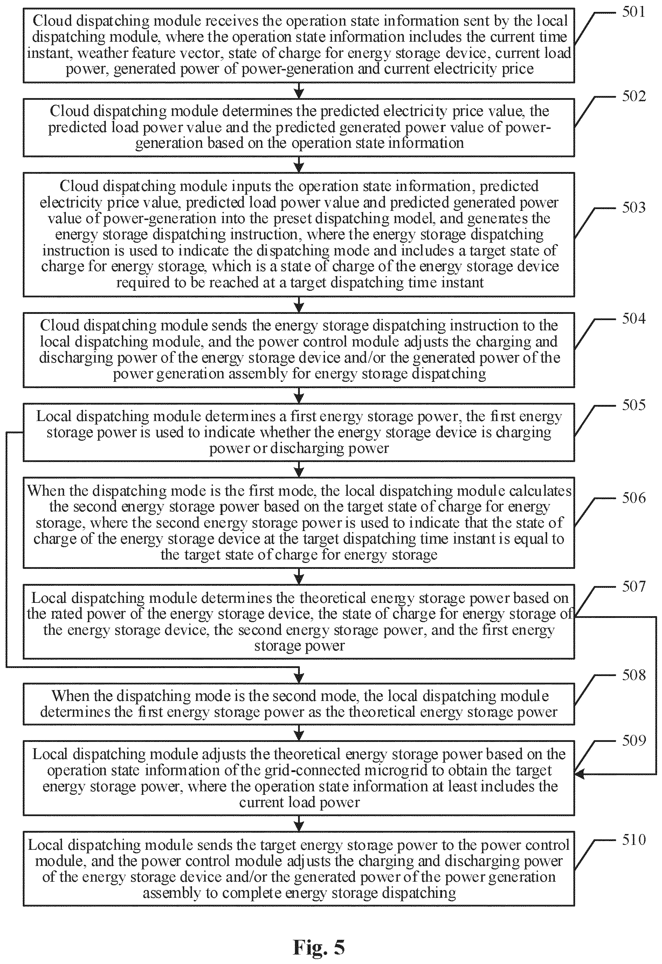

Reference is made to Figure 5, Figure 5 is a schematic diagram of an energy storage dispatching method according to another embodiment of the present disclosure, which specifically includes step 501 to step 510.

In step 501, the cloud dispatching module receives the operation state information sent by the local dispatching module. The operation state information includes the current time instant, weather feature vector, state of charge for energy storage device, current load power, generated power of power-generation, and current electricity price.

It should be noted that, before step 501, the method further includes a generation of the dispatching model, which specifically includes as follows.

1. Establishing a simulation environment for grid-connected microgrid dispatching, where the simulation environment is configured to simulate a system state of the grid-connected microgrid at each time point based on historical system state data and prediction data of the grid-connected microgrid.

It should be understood that a simulation environment is established based on historical system state data and prediction data of the grid-connected microgrid. As an example, it can select 0:00 on the first day of any month from the historical data as the initial time point of the simulation and 24:00 on the last day of that month as the end time point of simulation. The simulation environment supports single-step simulation and may feedback the system state at each time instant, including time $t$, weather $W_t$, generated power of power-generation $P_t^{pv}$, load power $P_t^{load}$, electricity price $C_t^{grid}$, state of charge for energy storage $E_t$ and other information. The step $\Delta t$ is consistent with the local fine-grained time interval. The simulation environment can receive instructions for energy storage charging-discharging power and instructions for photovoltaic power limit, and can simulate the state of charge for energy storage at a next time instant based on the state of charge for energy storage at the current time instant and satisfy the following constraints:

(a) SOC range constraint, i.e., the SOC value at any time is always maintained within the specified range, i.e., $E_{min} \leq E_t \leq E_{max}$.

(b) Energy storage power constraint, i.e., the energy storage charging power and discharging power are always less than or equal to the rated power of the energy storage system, at any time instant, i.e., $\left| P_t^{ess} \right| \leq P_{max}^{ess}$.

(c) Generated power constraint of power-generation, i.e., the generated power of power-generation is always less than or equal to the maximum generated power of power-generation of the power generation assembly, at any time instant, i.e., $0 \leq P_t^{pv} \leq P_{max}^{pv}$.

(d) Power control module power constraint, i.e., the sum of generated power of power-generation and energy storage power at any time instant is always less than or equal to the rated power of the power control module, i.e.,

$$P_t^{ess} + P_t^{pv} \leq P_{max}^{inv},$$

where $E_{min}$ represents the minimum value of the state of charge for energy storage and $E_{max}$ represents the maximum value of the state of charge for energy storage; $P_t^{ess}$ represents the energy storage charging-discharging power at the time instant t, the numerical value represents the power value, and the sign represents the charging or discharging state, where positive indicates discharging and negative indicates charging; $P_{max}^{ess}$ represents the rated power of the energy storage system; $P_{max}^{pv}$ represents the maximum generated power of power-generation of the power generation system; $P_{max}^{inv}$ represents the rated power of the power control module, and the power control module may be an inverter.

2. Establishing a deep reinforcement learning environment, which includes a state space, an action space, a state transition function and a reward function.

For purpose of description, in the embodiment of the present disclosure, the cloud coarse-grained time interval is set to 60 minutes, and the local fine-grained time interval is set to 1 minute.

There are four parts involved in establishing a reinforcement learning environment, i.e., defining a state $S_T$;

defining an action $a_T$; defining a state transition function $(s_T, a_T) \rightarrow s_{T+1}$; and defining a reward function $(s_T, a_T, s_{T+1}) \rightarrow r_{T+1}$.

Defining the state $S_T$: the state $S_T$ at the time instant $T$ is consistent with the feature vector $S_T$, that is, it includes the current time instant T, the weather feature vector $W_T$, the state of charge for energy storage device $E_T$, the current load power $P_T^{load}$, the power-generation power $P_T^{pv}$ and the current electricity price $C_T^{grid}$, the predicted load power value $\hat{P}_{T+1}^{load}$, the predicted generated power value of power-generation $\hat{P}_{T+1}^{pv}$ and the predicted electricity price value $\hat{C}_{T+1}^{grid}$.

Defining the action $a_T$: the action $a_T$ is consistent with the output of the dispatching model, that is, a seven-dimensional vector using One-hot encoding, which can be decoded into seven values: $\{0,1,2,3,4,5,6\}$. 0 indicates that the operation mode is a photovoltaic accommodation mode, 1 ~ 6 indicates the arbitrage mode, 1 ~ 6 respectively represents the target state of charge equal to 0, 0.2, 0.4, 0.6, 0.8, 1.0. In the accommodation mode, there is no instruction for target state of charge.

Defining the state transition function $(s_T, a_T) \rightarrow s_{T+1}$: since the cloud dispatching module goes through dispatching of the local dispatching module for $\Delta T/\Delta t = 60$ times, the state transition from $T \rightarrow T + 1$ in the reinforcement learning may be composed of $\Delta T/\Delta t$ steps of simulation in the simulation environment. During single-step simulation, the energy storage charging-discharging power and the limited generated power of power-generation inputted to the simulation environment are generated locally by the energy storage dispatching method.

Defining the reward function $(s_T, a_T, s_{T+1}) \rightarrow r_{T+1}$: the calculation equation of the reward $r_{T+1}$ is as follows:

$$\mathrm{r}_{T+1} = w_1 \times \sum_{i=1}^{\Delta T/\Delta t} \cos t_{T+i\times\Delta t} \, ;$$

where $\cos t_{T+i\times\Delta t}$ represents the electricity cost at the i-th step of the simulation and $w_1$ represents the adjustment coefficient.

3. Training an initial neural network model through a deep reinforcement learning algorithm together with the deep reinforcement learning environment and the simulation environment, so as to generate the preset dispatching model.

When using the deep reinforcement learning algorithm (for example, it may be a DQN algorithm) to train the initial neural network model, stop the training when the termination condition is met, save the model file, and use the model conversion tool to convert the model file so that the converted model file is compatible with a variety of hardware and software environments, such as Linux, Windows, ARM, x86, etc.

It should be noted that the deep reinforcement learning algorithm may also be replaced by preset rules or optimization solvers. The details are not limited here. The preset rules may also be rules of experts in the field.

In an embodiment, before step 501, the method further includes:

determining whether a current time instant is a cloud dispatching time instant,

in a case that the current time instant is the cloud dispatching time instant, collecting the operation state information of the grid-connected microgrid at the current time instant and sending the operation state information to the cloud dispatching module, where the operation state information includes the current time instant, a weather feature vector, a state of charge for an energy storage device, a current load power, a generated power of power-generation and a current electricity price.

In step 502, the cloud dispatching module determines the predicted electricity price value, the predicted load power value and the predicted generated power value of power-generation based on the operation state information.

In step 503, the cloud dispatching module inputs the operation state information, predicted electricity price value, predicted load power value and predicted generated power value of power-generation into the preset dispatching model, to generate the energy storage dispatching instruction. The energy storage dispatching instruction is used to indicate the dispatching mode and includes a target state of charge for energy storage, which is a state of charge of the energy storage device required to be reached at a target dispatching time instant.

In step 504, the cloud dispatching module sends the energy storage dispatching instruction to the local dispatching module, and the power control module adjusts the charging and discharging power of the energy storage device and/or the generated power of the power generation assembly for energy storage dispatching.

The cloud dispatching module sends the energy storage dispatching instruction to the local dispatching module, and the power control module adjusts the charging and discharging power of the energy storage device and/or the generated power of the power generation assembly to complete energy storage dispatching.

Steps 501-504 are similar to steps 301-304, which will not be repeated here.

In step 505, the local dispatching module determines a first energy storage power, where the first energy storage power is used to indicate the charging power or discharging power of the energy storage device.

In an embodiment, the local dispatching module acquires the current load power of the grid-connected microgrid; determines the output power of the power control module based on the current load power of the grid-connected microgrid and a preset power constraint, where the power constraint is that the output power of the power control module is less than or equal to the rated power of the power control module; then obtains the first energy storage power by using the output power of the power control module minus the generated power of the power generation assembly.

In step 506, when the dispatching mode is the first mode, the local dispatching module calculates the second energy storage power based on the target state of charge for energy storage. The second energy storage power is used to indicate that the state of charge of the energy storage device at the target dispatching time instant is equal to the target state of charge for energy storage.

The first mode is the arbitrage mode. When the local dispatching module is in this dispatching mode, the local dispatching module performs step 506 to step 507.

In step 507, the local dispatching module determines the theoretical energy storage power based on the rated power of the energy storage device, the state of charge for energy storage of the energy storage device, the second energy storage power, and the first energy storage power.

In an embodiment, the local dispatching module determines the minimum one between the second energy storage power and the first energy storage power as the candidate energy storage power; constrains the candidate energy storage power based on the preset constraint to obtain the theoretical energy storage power, where the preset constraint is that the rated power of the energy storage device is greater than or equal to an absolute value of the theoretical energy storage power, and the state of charge for energy storage of the energy storage device is less than a threshold of maximum state of charge.

For example, assuming that the second energy storage power is charging 4kW, that is, p2=-4kW, and then assuming that the current load power is 2kW, it may be determined that the power control module should discharge 2kW, and then assuming that the generated power is 1kW, it may be determined that the energy storage device should discharge 1kW, that is, the first energy storage power value p1=1kW. Therefore, the candidate energy storage power min(p1,p2) =-4kW, that is, the energy storage device is to charge with 4kW power.

It should be understood that the candidate energy storage power must satisfy the rated power constraint and SOC range constraint. For example, if the rated power of the energy storage device is only 3kW, then the theoretical energy storage power can only be equal to 3kW. For another example, if the SOC is full and cannot be charged, it means that the theoretical energy storage power can only be equal to 0kW.

In step 508, when the dispatching mode is the second mode, the local dispatching module determines the first energy storage power as the theoretical energy storage power.

The second mode is the accommodation mode. When the local dispatching module is in this dispatching mode, the local dispatching module performs step 508.

In step 509, the local dispatching module adjusts the theoretical energy storage power based on the operation state information of the grid-connected microgrid to obtain the target energy storage power. The operation state information at least includes the current load power.

In step 510, the local dispatching module sends the target energy storage power to the power control module, and the power control module adjusts the charging and discharging power of the energy storage device and/or the generated power of the power generation assembly, for energy storage dispatching.

Steps 509 to 510 are similar to steps 203 to 204, which will not be repeated here.

In the embodiment of the present disclosure, the cloud dispatching module generates an energy storage dispatching instruction including a dispatching mode and a target state of charge for energy storage based on the operation state information of the grid-connected microgrid uploaded by the local dispatching module and sends the instruction to the local dispatching module. Based on the energy storage dispatching instruction sent by the cloud dispatching module, the local dispatching module adjusts the energy storage power at fine-grained time intervals according to the operation state information of the grid-connected microgrid, and controls the grid-connected microgrid according to the adjusted target energy storage power value, whereby extending the dispatching interval for the cloud dispatching module to execute the dispatching strategy, reducing the number of interactions between the local dispatching module and the cloud dispatching module, improving the efficiency of the cloud dispatching module responding to the dispatching request of the local dispatching module, and improving the response speed of the grid-connected microgrid to load fluctuations. As a result, the efficiency of energy storage dispatching is improved.

The energy storage dispatching method in the embodiment of the present disclosure is described above.

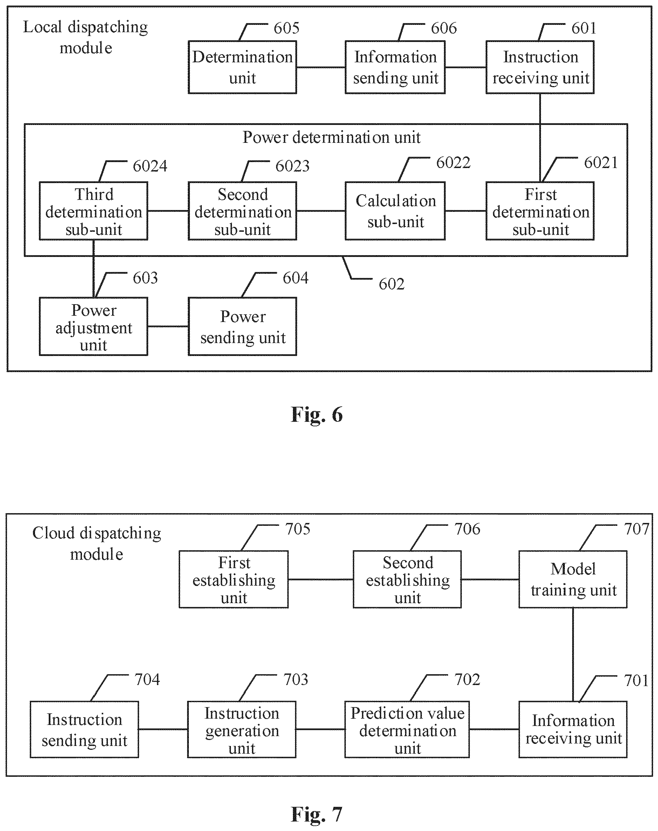

Referring to Figure 6, the local dispatching module in the embodiment of the present disclosure is described below. An exemplary local dispatching module according to the embodiment of the present disclosure is applied as a local dispatching module of a grid-connected microgrid system. The grid-connected microgrid system further includes a cloud dispatching module, a power control module, an energy storage device and a power generation assembly. The local dispatching module includes as follows:

an instruction receiving unit 601, configured to receive an energy storage dispatching instruction sent by the cloud dispatching module, where the energy storage dispatching instruction includes a dispatching mode and a target state of charge for energy storage;

a power determination unit 602, configured to determine a theoretical energy storage power, based on the dispatching mode and the target state of charge for energy storage;

a power adjustment unit 603, configured to adjust the theoretical energy storage power based on operation state information of the grid-connected microgrid to obtain a target energy storage power, where the operation state information at least includes a current load power; and

a power sending unit 604, configured to send the target energy storage power to the power control module, to allow the power control module adjust a charging and discharging power of the energy storage device and/or a generated power of the power generation assembly for energy storage dispatching.

In a feasible implementation, the power determination unit 602 includes:

a first determination sub-unit 6021, configured to determine a first energy storage power, where the first energy storage power is configured to indicate a charging power or a discharging power of the energy storage device;

a calculation sub-unit 6022, configured to calculate a second energy storage power, based on the target state of charge for energy storage, in response to the dispatching mode being a first mode, where the second energy storage power is configured to indicate that a state of charge of the energy storage device is equal to the target state of charge for energy storage at a target dispatching time instant;

a second determination sub-unit 6023, determine the theoretical energy storage power, based on a rated power of the energy storage device, an state of charge for energy storage of the energy storage device, the second energy storage power and the first energy storage power; and

a third determination sub-unit 6024, configured to determine the first energy storage power as the theoretical energy storage power in response to the dispatching mode being a second mode.

In a feasible implementation, the first determination sub-unit 6021 is specifically configured to:

acquire a current load power of the grid-connected microgrid;

determine, based on the current load power of the grid-connected microgrid and a preset power constraint, an output power of the power control module; where the power constraint is that the output power of the power control module is less than or equal to a rated power of the power control module; and

subtract the generated power of the power generation assembly from the output power of the power control module to obtain the first energy storage power.

In a feasible implementation, the second determination sub-unit 6023 is specifically configured to:

determine a minimum one between the second energy storage power and the first energy storage power as a candidate energy storage power;

constrain the candidate energy storage power based on a preset constraint to obtain the theoretical energy storage power, where the preset constraint is that the rated power of the energy storage device is greater than or equal to an absolute value of the theoretical energy storage power, and the state of charge for energy storage of the energy storage device is less than a threshold of maximum state of charge.

In a feasible implementation, the power generation assembly is a photovoltaic power generation assembly, and the power adjustment unit 603 is specifically configured to: determine whether the grid-connected microgrid is in a mode of feeding surplus power; in a case that the grid-connected microgrid is not in the mode of feeding surplus power, determine whether a power at a grid connection point of the grid-connected microgrid is fed into grid; in a case that the power at the grid connection point of the grid-connected microgrid is fed into grid, calculate a limited generated power of power-generation, which is configured to limit the generated power of the power generation assembly so that the power at the grid connection point is zero; and correct, based on the current load power of the grid-connected microgrid, the limited generated power of power-generation and the theoretical energy storage power to obtain the target energy storage power.

In a feasible implementation, the local dispatching module further includes: a determination unit 605, configured to determine whether a current time instant is a cloud dispatching time instant; an information sending unit 606, configured to collect the operation state information of the grid-connected microgrid at the current time instant and sending the operation state information to the cloud dispatching module in a case that the current time instant is the cloud dispatching time instant, where the operation state information includes the current time instant, a weather feature vector, a state of charge for an energy storage device, a current load power, a generated power of power-generation and a current electricity price.

In the embodiment of the present disclosure, based on the energy storage dispatching instruction sent by the cloud dispatching module, the local dispatching module adjusts the energy storage power at fine-grained time intervals according to the operation state information of the grid-connected microgrid, and control the grid-connected microgrid based on the adjusted target energy storage, whereby improving the response speed to the load fluctuations of the grid-connected microgrid and the efficiency of energy storage dispatching.

The following describes the cloud dispatching module in the embodiment of the present disclosure. Referring to Figure 7, an exemplary cloud dispatching module according to the embodiment of the present disclosure is applied as a cloud dispatching module of a grid-connected microgrid system. The grid-connected microgrid system further includes a local dispatching module, a power control module, an energy storage device and a power generation assembly. The cloud dispatching module includes as follows:

an information receiving unit 701, configured to receive operation state information sent by the local dispatching module, where the operation state information includes a current time instant, a weather feature vector, a state of charge for an energy storage device, a current load power, a generated power of power-generation and a current electricity price;

a prediction value determination unit 702, configured to determine, based on the operation state information, a predicted electricity price value, a predicted load power value and a predicted generated power value of power-generation;

an instruction generation unit 703, configured to input the operation state information, the predicted electricity price value, the predicted load power value and the predicted generated power value of power-generation into a preset dispatching model, to generate an energy storage dispatching instruction; where the energy storage dispatching instruction indicates a dispatching mode and includes a target state of charge for energy storage, which is a state of charge of the energy storage device required to be reached at a target dispatching time instant; and

an instruction sending unit 704, configured to send the energy storage dispatching instruction to the local dispatching module, to allow the power control module adjust a charging and discharging power of the energy storage device and/or a generated power of the power generation assembly for energy storage dispatching.

In a feasible implementation, the instruction generation unit 703 is specifically configured to:

generate a feature vector, based on the operation state information, the predicted electricity price value, the predicted load power value and the predicted generated power value of power-generation; and

generate, based on the feature vector and the preset dispatching model, an energy storage dispatching instruction.

In a feasible implementation, the cloud dispatching module further includes:

a first establishing unit 705, configured to establish a simulation environment for grid-connected microgrid dispatching, where the simulation environment is configured to simulate a system state of the grid-connected microgrid at each time point based on historical system state data and predicted data of the grid-connected microgrid;
a second establishing unit 706, configured to establish a deep reinforcement learning environment, which includes a state space, an action space, a state transition function and a reward function;

a model training unit 707, configured to train an initial neural network model through a deep reinforcement learning algorithm together with the deep reinforcement learning environment and the simulation environment, to generate the preset dispatching model.

In the embodiment of the present disclosure, based on the operation state information of the grid-connected microgrid uploaded by the local dispatching module, the cloud dispatching module generates an energy storage dispatching instruction with a dispatching mode and a target state of charge for energy storage, which extends the dispatch time interval for the cloud dispatching module to implement the dispatch strategy and reduces the number of interactions between the local dispatching module and the cloud dispatching module, improving the efficiency of the cloud dispatching module responding to the dispatching request of the local dispatching module.

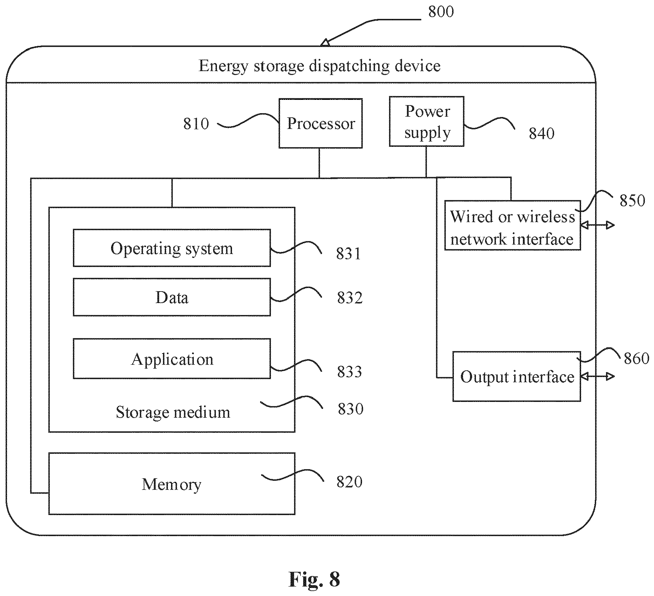

Figure 8 is a schematic diagram of an energy storage dispatching device according to an embodiment of the present disclosure. The energy storage dispatching device 800 may vary greatly due to different configurations or performance, and may include one or more processors (central processing units, CPU) 810 (e.g., one or more processors) and a memory 820, one or more storage media 830 (e.g., one or more mass storage devices) that stores applications 833 or data 832. The memory 820 and the storage medium 830 may be transitory storage or persistent storage. The program stored in the storage medium 830 may include one or more modules (not shown in the figure), and each module may execute a series of instruction operations for the energy storage dispatching device 800. Furthermore, the processor 810 may be configured to communicate with the storage medium 830 and execute a series of instruction operations in the storage medium 830 on the energy storage dispatching device 800.

The energy storage dispatching device 800 may further include one or more power supplies 840, one or more wired or wireless network interfaces 850, one or more input and output interfaces 860, and/or one or more operating devices 831, such as Windows Server, Mac OS X, Unix, Linux, FreeBSD and more. Those skilled in the art can understand that the structure of the energy storage dispatching device shown in Figure 8 does not constitute a limitation on the energy storage dispatching device. It may include more or fewer components than shown in the figure, or some components may be combined, or different arrangement of those components.

As an example and not a limitation, the energy storage dispatching device 800 may be a local dispatching module or a cloud dispatching module.

A computer-readable storage medium is further provided according to the present disclosure. The computer-readable storage medium may be a non-volatile computer-readable storage medium. The computer-readable storage medium may further be a volatile computer-readable storage medium. Instructions are stored in the computer-readable storage medium. When the instructions are run on the computer, they cause the computer to implement the steps of the energy storage dispatching method. The steps specifically include: receiving an energy storage dispatching instruction sent by the cloud dispatching module, where the energy storage dispatching instruction includes a dispatching mode and a target state of charge for energy storage; determining, based on the dispatching mode and the target state of charge for energy storage, a theoretical energy storage power; adjusting, based on operation state information of the grid-connected microgrid, the theoretical energy storage power, to obtain a target energy storage power, where the operation state information at least includes a current load power; and sending the target energy storage power to the power control module, to allow the power control module adjust a charging and discharging power of the energy storage device and/or a generated power of the power generation assembly for energy storage dispatching. In the embodiment of the present disclosure, based on the energy storage dispatching instruction sent by the cloud dispatching module, the local dispatching module adjusts the energy storage power at the fine-grained time interval according to the operation state information of the grid-connected microgrid. The grid-connected microgrid is controlled according to the adjusted target energy storage power value, which improves the response speed to load fluctuations in the grid-connected microgrid and elevates the dispatching efficiency.

The determining, based on the dispatching mode and the target state of charge for energy storage, the theoretical energy storage power includes: determining a first energy storage power, where the first energy storage power is configured to indicate a charging power or a discharging power of the energy storage device; in response to the dispatching mode being a first mode, calculating, based on the target state of charge for energy storage, a second energy storage power, where the second energy storage power is configured to indicate that a state of charge of the energy storage device is equal to the target state of charge for energy storage at a target dispatching time instant; determining the theoretical energy storage power, based on a rated power of the energy storage device, a state of charge for energy storage of the energy storage device, the second energy storage power and the first energy storage power; and in response to the dispatching mode being a second mode, determining the first energy storage power as the theoretical energy storage power.

The determining the first energy storage power includes: acquiring a current load power of the grid-connected microgrid; determining, based on the current load power of the grid-connected microgrid and a preset power constraint, an output power of the power control module, where the power constraint is that the output power of the power control module is less than or equal to a rated power of the power control module; and subtracting the generated power of the power generation assembly from the output power of the power control module to obtain the first energy storage power.

The determining the theoretical energy storage power, based on the rated power of the energy storage device, the state of charge for energy storage of the energy storage device, the second energy storage power and the first energy storage power includes: determining a minimum one between the second energy storage power and the first energy storage power as a candidate energy storage power; constraining the candidate energy storage power based on a preset constraint to obtain the theoretical energy storage power, where the preset constraint is that the rated power of the energy storage device is greater than or equal to an absolute value of the theoretical energy storage power, and the state of charge for energy storage of the energy storage device is less than a threshold of maximum state of charge.

The adjusting, based on the operation state information of the grid-connected microgrid, the theoretical energy storage power, to obtain the target energy storage power includes: determining whether the grid-connected microgrid is in a mode of feeding surplus power; in a case that the grid-connected microgrid is not in the mode of feeding surplus power, determining whether a power at a grid connection point of the grid-connected microgrid is fed into grid; in a case that the power at the grid connection point of the grid-connected microgrid is fed into grid, calculating a limited generated power of power-generation, which is configured to limit the generated power of the power generation assembly so that the power at the grid connection point is zero; and correcting, based on the current load power of the grid-connected microgrid, the limited generated power of power-generation and the theoretical energy storage power to obtain the target energy storage power.

Before receiving the energy storage dispatching instruction sent by the cloud dispatching module, the method further includes: determining whether a current time instant is a cloud dispatching time instant; in a case that the current time instant is the cloud dispatching time instant, collecting the operation state information of the grid-connected microgrid at the current time instant and sending the operation state information to the cloud dispatching module, where the operation state information includes the current time instant, a weather feature vector, a state of charge for an energy storage device, a current load power, a generated power of power-generation and a current electricity price.

A computer-readable storage medium is further provided according to the present disclosure. The computer-readable storage medium may be a non-volatile computer-readable storage medium. The computer-readable storage medium may further be a volatile computer-readable storage medium. Instructions are stored in the computer-readable storage medium. When the instructions are run on the computer, they cause the computer to implement the steps of the energy storage dispatching method. The steps specifically include: receiving operation state information sent by the local dispatching module, where the operation state information includes a current time instant, a weather feature vector, a state of charge for an energy storage device, a current load power, a generated power of power-generation and a current electricity price; determining, based on the operation state information, a predicted electricity price value, a predicted load power value and a predicted generated power value of power-generation; inputting the operation state information, the predicted electricity price value, the predicted load power value and the predicted generated power value of power-generation into a preset dispatching model, to generate an energy storage dispatching instruction; where the energy storage dispatching instruction indicates a dispatching mode and includes a target state of charge for energy storage, which is a state of charge of the energy storage device required to be reached at a target dispatching time instant; and sending the energy storage dispatching instruction to the local dispatching module, to allow the power control module adjust a charging and discharging power of the energy storage device and/or a generated power of the power generation assembly for energy storage dispatching.

The inputting the operation state information, the predicted electricity price value, the predicted load power value and the predicted generated power value of power-generation into the preset dispatching model, to generate the energy storage dispatching instruction, includes: generating a feature vector, based on the operation state information, the predicted electricity price value, the predicted load power value and the predicted generated power value of power-generation; and generating, based on the feature vector and the preset dispatching model, an energy storage dispatching instruction.

Before receiving the operation state information sent by the local dispatching module, the method further includes: establishing a simulation environment for grid-connected microgrid dispatching, where the simulation environment is configured to simulate a system state of the grid-connected microgrid at each time point based on historical system state data and predicted data of the grid-connected microgrid; establishing a deep reinforcement learning environment, which includes a state space, an action space, a state transition function and a reward function; training an initial neural network model through a deep reinforcement learning algorithm together with the deep reinforcement learning environment and the simulation environment, to generate the preset dispatching model.

Those skilled in the art can clearly understand that for the convenience and simplicity of description, the specific operation processes of the systems, devices and units described above can be referred to the corresponding processes in the foregoing method embodiments, which will not be repeated here.

In addition, in the description of the embodiments of the present disclosure, unless otherwise clearly stated and limited, the terms "installation", "communication" and "connection" should be understood in a broad sense. For example, it may be a fixed connection or a detachable connection, or integrally connected; it may be a mechanical connection or an electrical connection; it may be a direct connection or an indirect connection through an intermediate medium; it may be an internal communication between two elements. For those skilled in the art, the specific meanings of the above terms in the present disclosure can be understood in specific situations.

In a case that the functions are implemented in the form of software functional units and sold or used as independent products, they can be stored in a computer-readable storage medium. Based on this understanding, the technical solutions of the present disclosure essentially or the part that contributes to the existing technology or the part of the technical solution can be embodied in the form of a software product. The computer software product is stored in a storage medium, including several instructions are used to cause a computer device (which may be a personal computer, a server, or a network device, etc.) to execute all or part of the steps of the methods described in various embodiments of the present disclosure. The aforementioned storage medium includes: a U disk, a mobile hard disk, a read-only memory (ROM), a random-access memory (RAM), a magnetic disk or optical disk and other media that can store program codes.

In the description of the present disclosure, it should be noted that the terms such as "center", "upper", "lower", "left", "right", "vertical", "horizontal", "inner", "outer" and the like indicated the orientation or positional relationship are based on the orientation or positional relationship shown in the drawings. Such term is only for the convenience of describing the present disclosure and simplifying the description, which does not indicate or imply that the device or element referred to must have a specific orientation or construct in a specific orientation and operation. Thus, such term should not be construed as a limitation of the present disclosure. Furthermore, the terms "first", "second" and "third" are used for descriptive purposes only and are not to be construed as indicating or implying relative importance.

Finally, it should be noted that the above embodiments are only specific implementations of the present disclosure and are used to illustrate the technical solutions of the present disclosure rather than to limit them. The protection scope of the present disclosure is not limited thereto. Although the present disclosure has been described in detail with reference to the foregoing embodiments, those skilled in the art should understand that any person familiar with the technical field can still modify the technical solutions disclosed in the foregoing embodiments or can easily come to the idea of changes, or equivalent substitutions of some of the technical features within the technical scope disclosed by the present disclosure; these modifications, changes or substitutions do not deviate the corresponding technical solutions from the spirit and scope of the technical solutions of the embodiments of the present disclosure, and should be covered by the protection scope of the present disclosure. Therefore, the protection scope of the present disclosure should be subject to the protection scope of the claims.

**Claims**

1. An energy storage dispatching method, applied to a local dispatching module of a grid-connected microgrid system, wherein the grid-connected microgrid system further comprises a cloud dispatching module, a power control module, an energy storage device and a power generation assembly, and the method comprises:

   receiving an energy storage dispatching instruction sent by the cloud dispatching module, wherein the energy storage dispatching instruction comprises a dispatching mode and a target state of charge for energy storage;
   determining, based on the dispatching mode and the target state of charge for energy storage, a theoretical energy storage power;
   adjusting, based on operation state information of the grid-connected microgrid, the theoretical energy storage power, to obtain a target energy storage power, and the operation state information at least comprises a current load power; and
   sending the target energy storage power to the power control module, to allow the power control module adjust a charging and discharging power of the energy storage device and/or a generated power of the power generation assembly for energy storage dispatching.

2. The energy storage dispatching method according to claim 1, wherein the determining, based on the dispatching mode and the target state of charge for energy storage, the theoretical energy storage power comprises:

   determining a first energy storage power, wherein the first energy storage power is configured to indicate a charging power or a discharging power of the energy storage device;
   in response to the dispatching mode being a first mode, calculating, based on the target state of charge for energy storage, a second energy storage power, wherein the second energy storage power is configured to indicate that a state of charge of the energy storage device is equal to the target state of charge for energy storage at a target dispatching time instant;
   determining the theoretical energy storage power, based on a rated power of the energy storage device, a state of charge for energy storage of the energy storage device, the second energy storage power and the first energy storage power; and

in response to the dispatching mode being a second mode, determining the first energy storage power as the theoretical energy storage power.

3. The energy storage dispatching method according to claim 2, wherein the determining the first energy storage power comprises:

acquiring a current load power of the grid-connected microgrid;
determining, based on the current load power of the grid-connected microgrid and a preset power constraint, an output power of the power control module, wherein the power constraint is that the output power of the power control module is less than or equal to a rated power of the power control module; and
subtracting the generated power of the power generation assembly from the output power of the power control module to obtain the first energy storage power.

4. The energy storage dispatching method according to claim 2, wherein the determining the theoretical energy storage power, based on the rated power of the energy storage device, the state of charge for energy storage of the energy storage device, the second energy storage power and the first energy storage power comprises:

determining a minimum one between the second energy storage power and the first energy storage power as a candidate energy storage power;
constraining the candidate energy storage power based on a preset constraint to obtain the theoretical energy storage power, wherein the preset constraint is that the rated power of the energy storage device is greater than or equal to an absolute value of the theoretical energy storage power, and the state of charge for energy storage of the energy storage device is less than a threshold of maximum state of charge.

5. The energy storage dispatching method according to claim 1, wherein the adjusting, based on the operation state information of the grid-connected microgrid, the theoretical energy storage power, to obtain the target energy storage power comprises:

determining whether the grid-connected microgrid is in a mode of feeding surplus power;
in a case that the grid-connected microgrid is not in the mode of feeding surplus power, determining whether a power at a grid connection point of the grid-connected microgrid is fed into grid;
in a case that the power at the grid connection point of the grid-connected microgrid is fed into grid, calculating a limited generated power of power-generation, which is configured to limit the generated power of the power generation assembly so that the power at the grid connection point is zero; and
correcting, based on the current load power of the grid-connected microgrid, the limited generated power of power-generation and the theoretical energy storage power, to obtain the target energy storage power.

6. The energy storage dispatching method according to claim 1, wherein before receiving the energy storage dispatching instruction sent by the cloud dispatching module, the method further comprises:

determining whether a current time instant is a cloud dispatching time instant; and
in a case that the current time instant is the cloud dispatching time instant, collecting the operation state information of the grid-connected microgrid at the current time instant and sending the operation state information to the cloud dispatching module, wherein the operation state information comprises the current time instant, a weather feature vector, a state of charge for the energy storage device, a current load power, the generated power of power-generation and a current electricity price.

7. An energy storage dispatching method, applied to a cloud dispatching module of a grid-connected microgrid system, wherein the grid-connected microgrid system further comprises a local dispatching module, a power control module, an energy storage device and a power generation assembly, and the method comprises:

receiving operation state information sent by the local dispatching module, wherein the operation state information comprises a current time instant, a weather feature vector, a state of charge for the energy storage device, a current load power, a generated power of power-generation and a current electricity price;
determining, based on the operation state information, a predicted electricity price value, a predicted load power value and a predicted generated power value of power-generation;

inputting the operation state information, the predicted electricity price value, the predicted load power value and the predicted generated power value of power-generation into a preset dispatching model, to generate an energy storage dispatching instruction, wherein the energy storage dispatching instruction indicates a dispatching mode and comprises a target state of charge for energy storage, which is a state of charge of the energy storage device required to be reached at a target dispatching time instant; and

sending the energy storage dispatching instruction to the local dispatching module, to allow the power control module adjust a charging and discharging power of the energy storage device and/or the generated power of the power generation assembly for energy storage dispatching.

8. The energy storage dispatching method according to claim 7, wherein the inputting the operation state information, the predicted electricity price value, the predicted load power value and the predicted generated power value of power-generation into the preset dispatching model, to generate the energy storage dispatching instruction, comprises:

generating a feature vector, based on the operation state information, the predicted electricity price value, the predicted load power value and the predicted generated power value of power-generation; and

generating, based on the feature vector and the preset dispatching model, the energy storage dispatching instruction.

9. The energy storage dispatching method according to claim 7, wherein before receiving the operation state information sent by the local dispatching module, the method further comprises:

establishing a simulation environment for grid-connected microgrid dispatching, wherein the simulation environment is configured to simulate a system state of the grid-connected microgrid at each time point based on historical system state data and predicted data of the grid-connected microgrid;

establishing a deep reinforcement learning environment, which comprises a state space, an action space, a state transition function and a reward function; and

training an initial neural network model through a deep reinforcement learning algorithm together with the deep reinforcement learning environment and the simulation environment, to generate the preset dispatching model.

10. An energy storage dispatching method, applied to a grid-connected microgrid system, wherein the grid-connected microgrid system comprises a local dispatching module, a cloud dispatching module, a power control module, an energy storage device and a power generation assembly, and the method comprises:

receiving, by the cloud dispatching module, operation state information sent by the local dispatching module, wherein the operation state information comprises a current time instant, a weather feature vector, a state of charge for the energy storage device, a current load power, a generated power of power-generation and a current electricity price;

determining, by the cloud dispatching module, a predicted electricity price value, a predicted load power value and a predicted generated power value of power-generation, based on the operation state information;

inputting, by the cloud dispatching module, the operation state information, the predicted electricity price value, the predicted load power value and the predicted generated power value of power-generation into a preset dispatching model, to generate an energy storage dispatching instruction, wherein the energy storage dispatching instruction indicates a dispatching mode and comprises a target state of charge for energy storage, which is a state of charge of the energy storage device required to be reached at a target dispatching time instant;

sending, by the cloud dispatching module, the energy storage dispatching instruction to the local dispatching module, to allow the power control module adjust a charging and discharging power of the energy storage device and/or the generated power of the power generation assembly for energy storage dispatching;

determining, by the local dispatching module, a theoretical energy storage power, based on the dispatching mode and the target state of charge for energy storage;

adjusting, by the local dispatching module, the theoretical energy storage power based on the operation state information of the grid-connected microgrid, to obtain a target energy storage power, wherein the operation state information at least comprises the current load power; and

sending, by the local dispatching module, the target energy storage power to the power control module, so that the power control module adjusts the charging and discharging power of the energy storage device and/or the generated power of the power generation assembly for energy storage dispatching.

11. A local dispatching module, applied as a local dispatching module of a grid-connected microgrid system, wherein the grid-connected microgrid system further comprises a cloud dispatching module, a power control module, an energy storage device and a power generation assembly, and the local dispatching module comprises:

an instruction receiving unit, configured to receive an energy storage dispatching instruction sent by the cloud dispatching module, wherein the energy storage dispatching instruction comprises a dispatching mode and a target state of charge for energy storage;

a power determination unit, configured to determine a theoretical energy storage power, based on the dispatching mode and the target state of charge for energy storage;

a power adjustment unit, configured to adjust the theoretical energy storage power based on operation state information of the grid-connected microgrid to obtain a target energy storage power, wherein the operation state information at least comprises a current load power; and

a power sending unit, configured to send the target energy storage power to the power control module, to allow the power control module adjust a charging and discharging power of the energy storage device and/or a generated power of the power generation assembly for energy storage dispatching.

12. A cloud dispatching module, applied as a cloud dispatching module of a grid-connected microgrid system, wherein the grid-connected microgrid system further comprises a local dispatching module, a power control module, an energy storage device and a power generation assembly, and the cloud dispatching module comprises:

an information receiving unit, configured to receive operation state information sent by the local dispatching module, wherein the operation state information comprises a current time instant, a weather feature vector, a state of charge for the energy storage device, a current load power, a generated power of power-generation and a current electricity price;

a prediction value determination unit, configured to determine, based on the operation state information, a predicted electricity price value, a predicted load power value and a predicted generated power value of power-generation;

an instruction generation unit, configured to input the operation state information, the predicted electricity price value, the predicted load power value and the predicted generated power value of power-generation into a preset dispatching model, to generate an energy storage dispatching instruction, wherein the energy storage dispatching instruction indicates a dispatching mode and comprises a target state of charge for energy storage, which is a state of charge of the energy storage device required to be reached at a target dispatching time instant;

an instruction sending unit, configured to send the energy storage dispatching instruction to the local dispatching module, to allow the power control module adjust a charging and discharging power of the energy storage device and/or the generated power of the power generation assembly for energy storage dispatching.

13. An energy storage dispatching device, comprising:

a memory; and

at least one processor;

wherein the memory is configured to store instructions, and the memory and the at least one processor are interconnected through a line; the at least one processor is configured to call the instructions in the memory to cause the energy storage dispatching device to implement the energy storage dispatching method according to any one of claims 1 to 6.

14. An energy storage dispatching device, comprising:

a memory; and

at least one processor;

wherein the memory is configured to store instructions, and the memory and the at least one processor are interconnected through a line; the at least one processor is configured to call the instructions in the memory to cause the energy storage dispatching device to implement the energy storage dispatching method according to any one of claims 7 to 9.

15. A computer readable storage medium storing instructions thereon, wherein the instructions, when executed by a processor, implement the energy storage dispatching method according to any one of claims 1 to 10.

**Fig. 1**

Receive an energy storage dispatching instruction sent by the cloud dispatching module, where the energy storage dispatching instruction includes a dispatching mode and a target state of charge for energy storage — 201

Determine, based on the dispatching mode and the target state of charge for energy storage, a theoretical energy storage power — 202

Adjust, based on operation state information of the grid-connected microgrid, the theoretical energy storage power, to obtain a target energy storage power, and the operation state information at least includes a current load power — 203

Send the target energy storage power to the power control module, to allow the power control module adjust a charging and discharging power of the energy storage device and/or a generated power of the power generation assembly for energy storage dispatching — 204

Fig. 2

Receive operation state information sent by the local dispatching module, where the operation state information includes a current time instant, a weather feature vector, a state of charge for an energy storage device, a current load power, a generated power of power-generation and a current electricity price ⟋— 301

Determine, based on the operation state information, a predicted electricity price value, a predicted load power value and a predicted generated power value of power-generation ⟋— 302

Input the operation state information, the predicted electricity price value, the predicted load power value and the predicted generated power value of power-generation into a preset dispatching model, to generate an energy storage dispatching instruction; where the energy storage dispatching instruction indicates a dispatching mode and includes a target state of charge for energy storage, which is a state of charge of the energy storage device required to be reached at a target dispatching time instant ⟋— 303

Send the energy storage dispatching instruction to the local dispatching module, to allow the power control module adjust a charging and discharging power of the energy storage device and/or a generated power of the power generation assembly for energy storage dispatching ⟋— 304

**Fig. 3**

Operation state information

Cloud dispatching module

Message queue

Energy storage dispatching instruction

| Inference sub-module | Prediction sub-module | Predicted data | Database |

Model

| Model library | Model | Training sub-module | Historical data |

**Fig. 4**

Cloud dispatching module receives the operation state information sent by the local dispatching module, where the operation state information includes the current time instant, weather feature vector, state of charge for energy storage device, current load power, generated power of power-generation and current electricity price — 501

Cloud dispatching module determines the predicted electricity price value, the predicted load power value and the predicted generated power value of power-generation based on the operation state information — 502

Cloud dispatching module inputs the operation state information, predicted electricity price value, predicted load power value and predicted generated power value of power-generation into the preset dispatching model, and generates the energy storage dispatching instruction, where the energy storage dispatching instruction is used to indicate the dispatching mode and includes a target state of charge for energy storage, which is a state of charge of the energy storage device required to be reached at a target dispatching time instant — 503

Cloud dispatching module sends the energy storage dispatching instruction to the local dispatching module, and the power control module adjusts the charging and discharging power of the energy storage device and/or the generated power of the power generation assembly for energy storage dispatching — 504

Local dispatching module determines a first energy storage power, the first energy storage power is used to indicate whether the energy storage device is charging power or discharging power — 505

When the dispatching mode is the first mode, the local dispatching module calculates the second energy storage power based on the target state of charge for energy storage, where the second energy storage power is used to indicate that the state of charge of the energy storage device at the target dispatching time instant is equal to the target state of charge for energy storage — 506

Local dispatching module determines the theoretical energy storage power based on the rated power of the energy storage device, the state of charge for energy storage of the energy storage device, the second energy storage power, and the first energy storage power — 507

When the dispatching mode is the second mode, the local dispatching module determines the first energy storage power as the theoretical energy storage power — 508

Local dispatching module adjusts the theoretical energy storage power based on the operation state information of the grid-connected microgrid to obtain the target energy storage power, where the operation state information at least includes the current load power — 509

Local dispatching module sends the target energy storage power to the power control module, and the power control module adjusts the charging and discharging power of the energy storage device and/or the generated power of the power generation assembly to complete energy storage dispatching — 510

**Fig. 5**

Local dispatching module

605 Determination unit — 606 Information sending unit — 601 Instruction receiving unit

Power determination unit

6024 Third determination sub-unit — 6023 Second determination sub-unit — 6022 Calculation sub-unit — 6021 First determination sub-unit

602

603 Power adjustment unit — 604 Power sending unit

**Fig. 6**

Cloud dispatching module

705 First establishing unit — 706 Second establishing unit — 707 Model training unit

704 Instruction sending unit — 703 Instruction generation unit — 702 Prediction value determination unit — 701 Information receiving unit

**Fig. 7**

800

Energy storage dispatching device

810 — Processor  Power supply  — 840

Wired or wireless network interface — 850

Operating system — 831

Data — 832

Application — 833

Storage medium — 830

Output interface — 860

Memory — 820

**Fig. 8**

Europäisches
Patentamt

European
Patent Office

Office européen
des brevets

# EUROPEAN SEARCH REPORT

| | Application Number |
| --- | --- |
| | EP 23 21 2109 |

## DOCUMENTS CONSIDERED TO BE RELEVANT

| Category | Citation of document with indication, where appropriate, of relevant passages | Relevant to claim | CLASSIFICATION OF THE APPLICATION (IPC) |
| --- | --- | --- | --- |
| X | US 2013/162037 A1 (KIM MIN-GYUNG [KR] ET AL) 27 June 2013 (2013-06-27) * paragraphs [0037] - [0121]; figures 1-7 * | 1-15 | INV. H02J3/32 H02J3/38 H02J3/48 H02J13/00 |
| A | US 2019/036340 A1 (MEEKER RICHARD H [US] ET AL) 31 January 2019 (2019-01-31) * the whole document * | 1-15 | |
| A | EP 2 953 230 A1 (TOSHIBA KK [JP]) 9 December 2015 (2015-12-09) * the whole document * | 1-15 | |
| A | EP 3 422 516 A1 (OMRON TATEISI ELECTRONICS CO [JP]) 2 January 2019 (2019-01-02) * the whole document * | 1-15 | |

| | |
| --- | --- |
| | **TECHNICAL FIELDS SEARCHED (IPC)** |
| | H02J |

The present search report has been drawn up for all claims

| Place of search | Date of completion of the search | Examiner |
| --- | --- | --- |
| Munich | 14 June 2024 | Hunckler, José |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**                                        EP 23 21 2109

This annex lists the patent family members relating to the patent documents cited in the above-mentioned European search report.
The members are as contained in the European Patent Office EDP file on
The European Patent Office is in no way liable for these particulars which are merely given for the purpose of information.

14-06-2024

| Patent document cited in search report | | Publication date | Patent family member(s) | | Publication date |
|---|---|---|---|---|---|
| US 2013162037 | A1 | 27-06-2013 | KR | 20130074046 A | 04-07-2013 |
|  |  |  | US | 2013162037 A1 | 27-06-2013 |
| US 2019036340 | A1 | 31-01-2019 | GB | 2594034 A | 20-10-2021 |
|  |  |  | US | 2019036340 A1 | 31-01-2019 |
|  |  |  | US | 2021281076 A1 | 09-09-2021 |
|  |  |  | WO | 2019023715 A1 | 31-01-2019 |
| EP 2953230 | A1 | 09-12-2015 | EP | 2953230 A1 | 09-12-2015 |
|  |  |  | JP | 2014150641 A | 21-08-2014 |
|  |  |  | WO | 2014119153 A1 | 07-08-2014 |
| EP 3422516 | A1 | 02-01-2019 | CN | 107851994 A | 27-03-2018 |
|  |  |  | EP | 3422516 A1 | 02-01-2019 |
|  |  |  | JP | 6402731 B2 | 10-10-2018 |
|  |  |  | JP | 2017153268 A | 31-08-2017 |
|  |  |  | US | 2018248375 A1 | 30-08-2018 |
|  |  |  | WO | 2017145462 A1 | 31-08-2017 |

For more details about this annex : see Official Journal of the European Patent Office, No. 12/82